# EUROPEAN PATENT SPECIFICATION

(11) **EP 2 736 323 B1**
(45) Date of publication and mention of the grant of the patent: **14.11.2018**
(21) Application number: 12714277.6
(22) Date of filing: 30.03.2012
(51) Int. Cl.: A01K 1/02, A01K 5/02

(54) **SYSTEM FOR STOWING, PRESERVING AND DISTRIBUTING FODDER IN SHIPS FOR TRANSPORTING LARGE QUANTITIES OF ANIMALS**
SYSTEM ZUM VERSTAUEN, KONSERVIEREN UND VERTEILEN VON FUTTER-IN SCHIFFEN ZUM TRANSPORT GROSSER MENGEN VON TIEREN
SYSTÈME PERMETTANT DE RANGER, DE CONSERVER ET DE DISTRIBUER DU FOURRAGE DANS DES BATEAUX DESTINÉS À TRANSPORTER UN GRAND NOMBRE D'ANIMAUX

(30) Priority: 29.07.2011 IT MI20111438
(43) Date of publication of application: 04.06.2014
(73) Proprietor: Falconi Engineering CM S.r.l., 25031 Capriolo (IT)
(72) Inventor: FALCONI, Serafino, 24060 Villongo (IT)
(74) Representative: Bruni, Giovanni
(86) International application number: PCT/EP2012/055773
(87) International publication number: WO 2013/017297

(56) References cited:
- EP-A1- 2 092 821
- DE-A1- 1 607 217
- DE-A1- 3 150 934
- JP-A- S53 104 986

## Description

The present invention relates to a system for stowing, preserving and distributing fodder in ships for transporting large quantities of animals.
As is known, when the farming site of animals, such as for example sheep, cattle, camels, ostriches, is far from the location of use or slaughter, it is necessary to provide for their transportation, and large ships are used if the quantity of animals to be transported is great and the trip requires many days and the crossing of seas or oceans.
For example the document DE3150934 A1 describes a feed distribution apparatus on board ships for livestock transport has stalls arranged one above the other on a plurality of decks, feed troughs erected in the latter and conveyor means for the horizontal distribution of the feed and conveyor means for the removal of the feed from a bunker , drop pipes extending vertically and continuously through the decks, being connected by their upper end to the conveying means, having outlet pipes attached obliquely at an angle at deck level, which terminate in the troughs, and possessing braking means at the free ends thereof for the emerging feed. Another example is the document JPS53104986 that shows a similar system of the document above described, with several silos symmetrically arranged for stability purposes.
Such ships, known as livestock carrers, are obtained from ships designed originally for other uses and then adapted for this requirement by dividing the available space into stalls for the accommodation of the animals. In such ships, in order to meet the feeding requirements of the animals during the trip, a large pile of fodder is loaded on the upper deck.
During navigation, the fodder needed to feed the animals is taken from the pile and conveyed, by mainly manual means, such as for example wheelbarrows, at the most assisted by conveyors and/or mechanical elevators for performing specific functions, to the compartments for the animals.
The systems currently used to store and distribute fodder for feeding animals during transport on ships suffer the problem of requiring, for their operation, a considerable input of labor with consequent high costs.

Moreover, the apparatuses that are used have poor reliability, particularly as regards:
- output rates per hour;
- certainty in compliance with the periodic feeding requirements of the animals, considering that if they are fed only with fodder the weight losses may be substantial;
- safety and resistance to atmospheric agents and weather disturbances;
- safety against fire and against explosions.

The aim of the present invention is to solve the problems mentioned above, by providing a system for stowing, preserving and distributing fodder in ships for transporting large quantities of animals, that can operate in an almost completely automated manner eliminating or reducing in a substantial manner the costs of the labor required.

Within this aim, an object of the invention is to provide a system which has high precision and reliability in operation particularly as regards the output rates per hour of fodder supplied and the periodic intervals of the supply of fodder to the animals.

Another object of the invention is to provide a system which protects adequately the fodder against atmospheric agents.

A further object of the invention is to provide a system which makes it possible to perform the loading and, if required, the unloading of the fodder in an automated manner.

Yet another object of the invention is to provide a system which, though being capable of stowing and managing great quantities of fodder, does not create problems of balance and stability to the ship on which it is installed.

Another object of the invention is to provide a system which makes it possible to recover and stow again the excess fodder so as to avoid alteration and/or deterioration of its nutritional properties.

This aim and these and other objects which will become better apparent hereinafter are achieved by a system for stowing, preserving and distributing fodder in ships for transporting large quantities of animals, according to claim 1.

Further characteristics and advantages of the invention will become better apparent from the description of a preferred but not exclusive embodiment of the system according to the invention, illustrated by way of non-limiting example in the accompanying drawings, wherein:

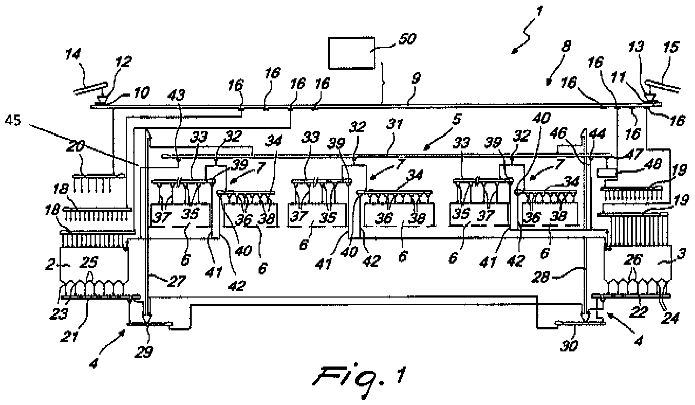

Figure 1 is a diagram of the flow of the system according to the invention;

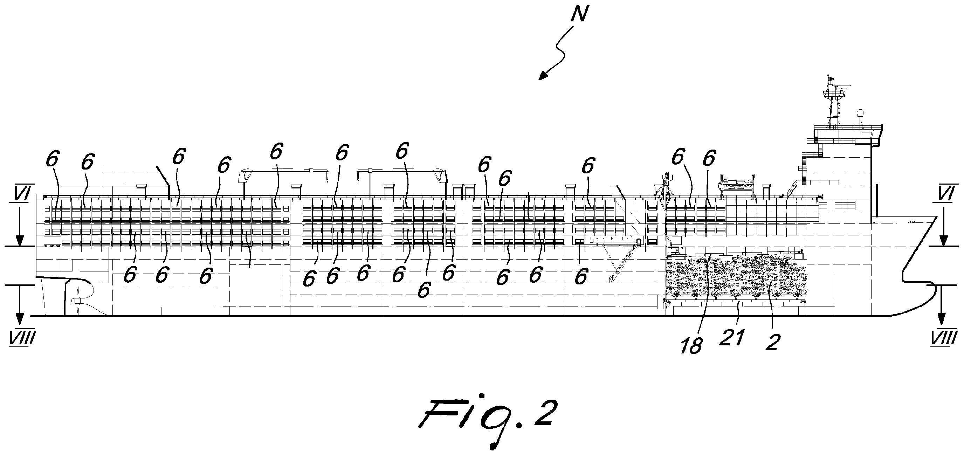

Figure 2 is a schematic partially sectional view, taken along a vertical plane, of a ship on which the system according to the invention is installed;

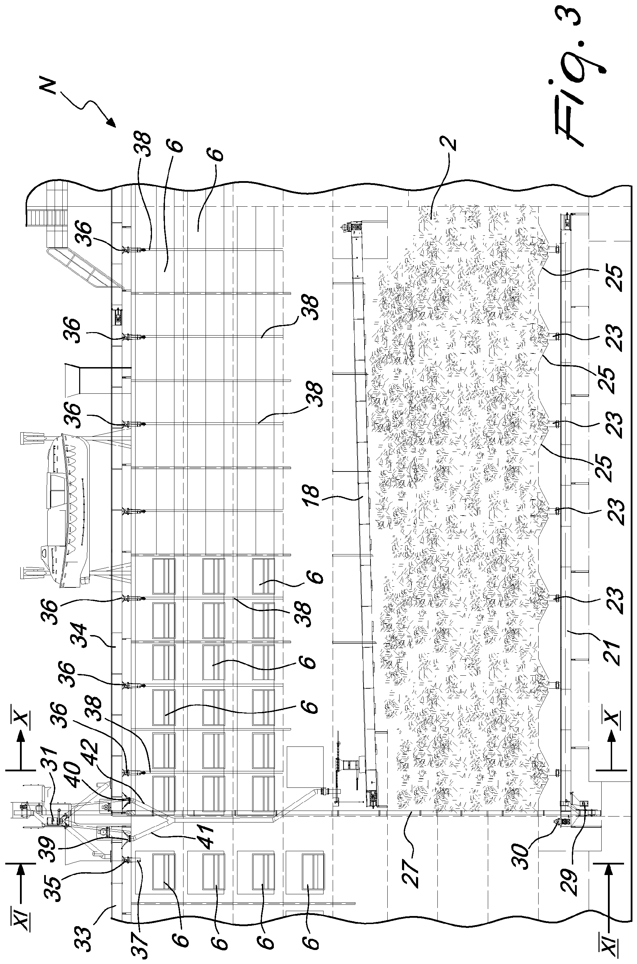

Figure 3 is an enlarged-scale view of a detail of Figure 2;

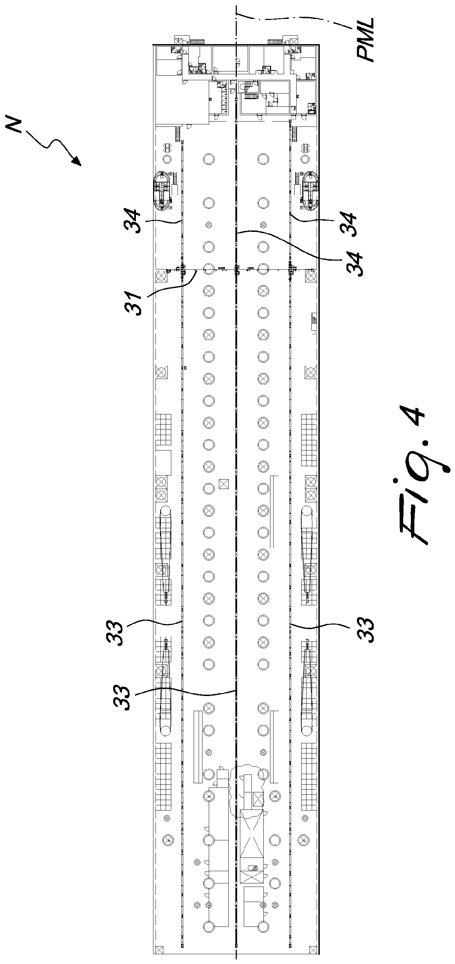

Figure 4 is a top plan view of the ship of Figure 2;

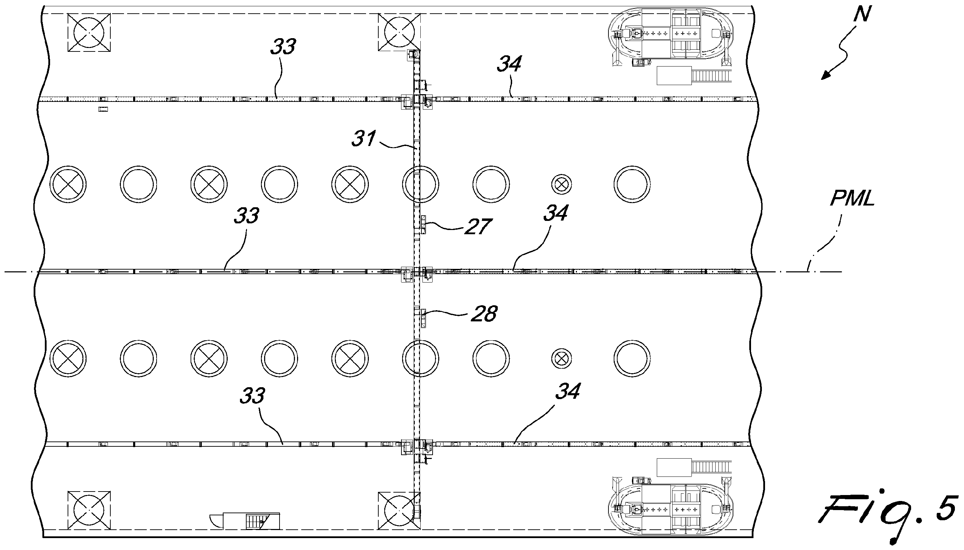

Figure 5 is an enlarged-scale view of a detail of Figure 4;

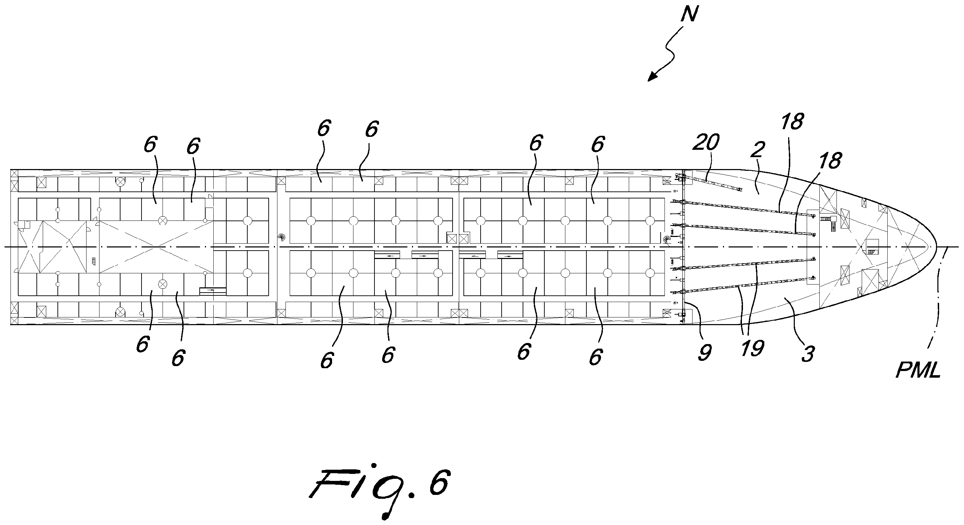

Figure 6 is a schematic sectional view of Figure 2, taken along the line VI-VI;

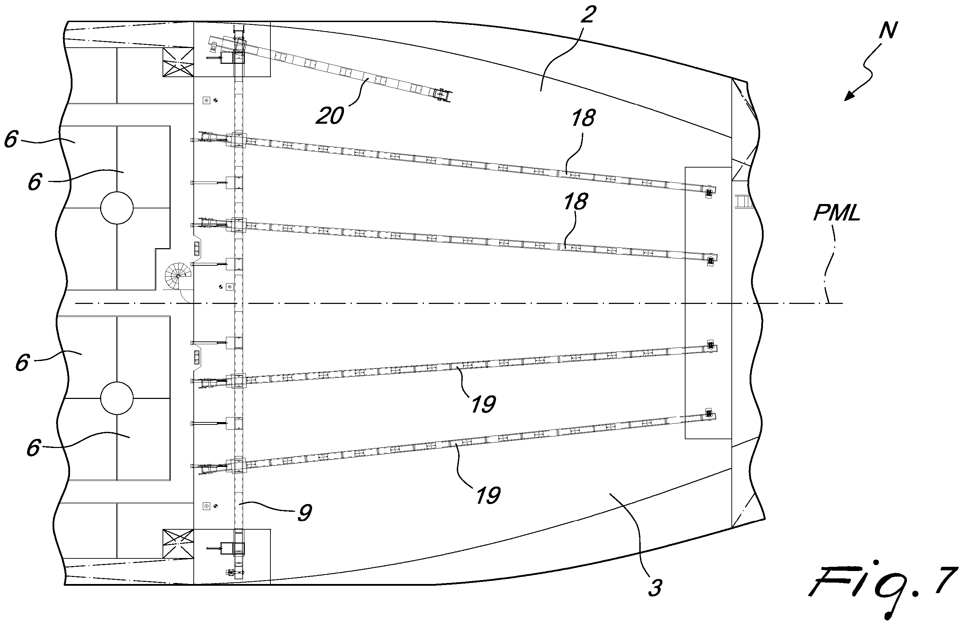

Figure 7 is an enlarged-scale view of a detail of Figure 6;

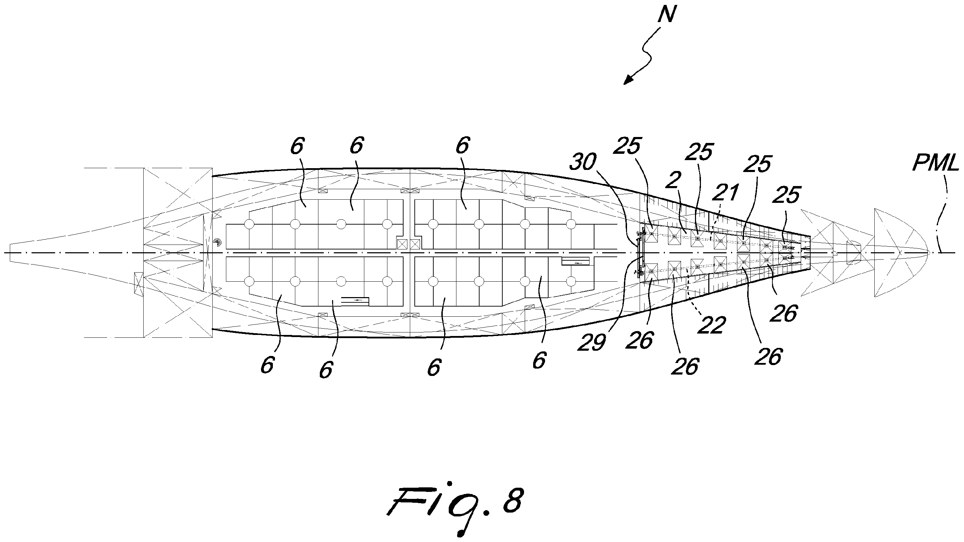

Figure 8 is a schematic sectional view of Figure 2, taken along the line VIII-VIII;

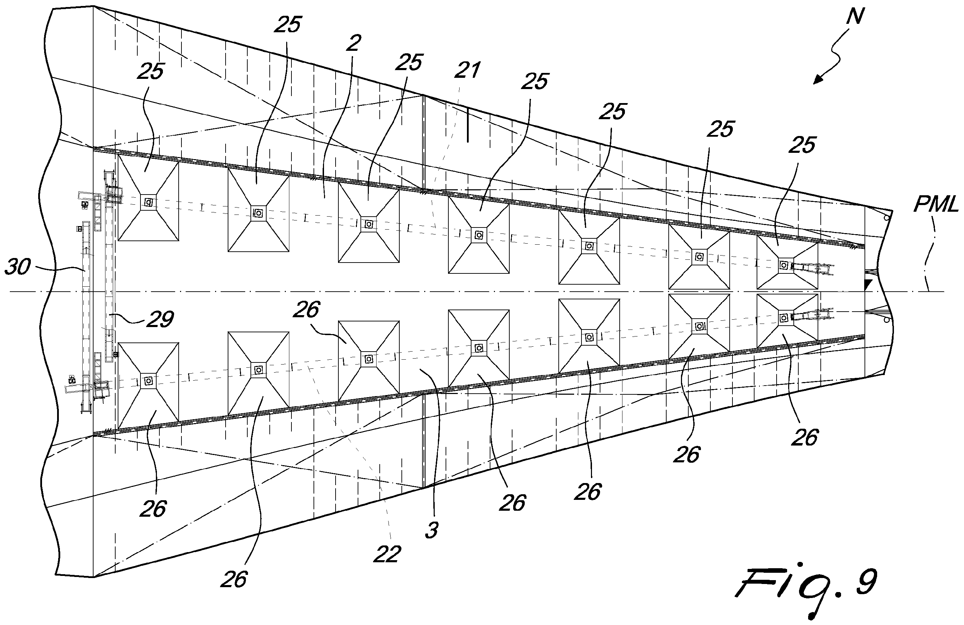

Figure 9 is an enlarged-scale view of a detail of Figure 8;

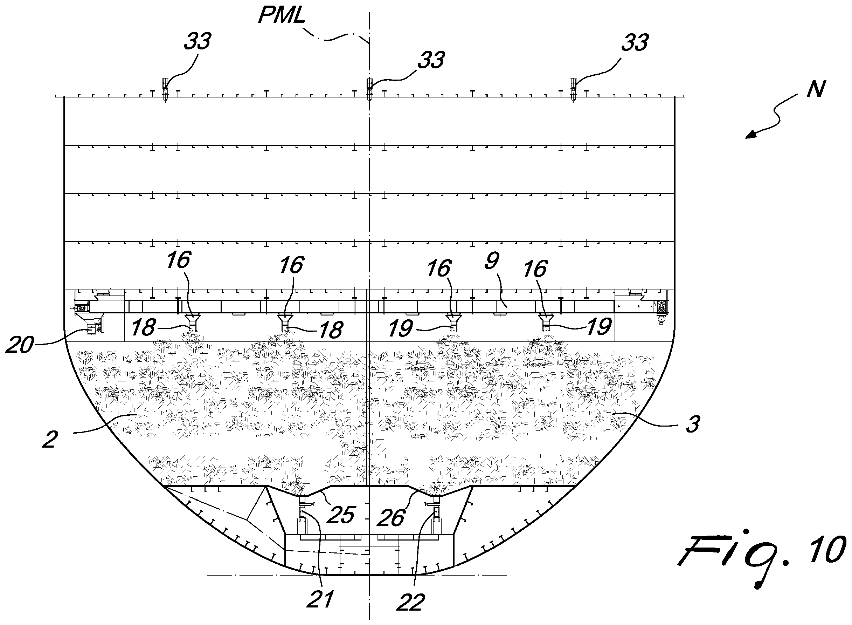

Figure 10 is a schematic sectional view of Figure 3, taken along the line X-X;

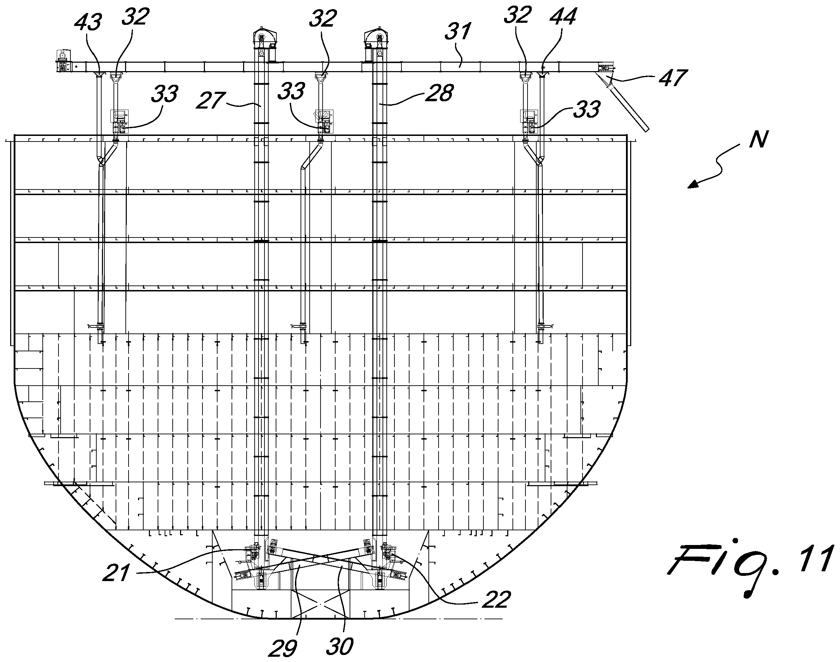

Figure 11 is a schematic sectional view of Figure 3, taken along the line XI-XI;

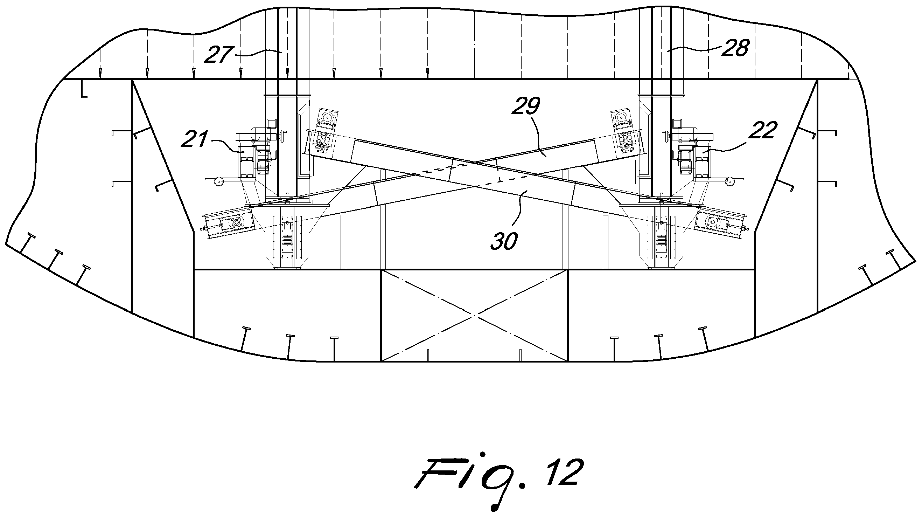

Figure 12 is an enlarged-scale view of a detail of Figure 11.

With reference to the figures, the system according to the invention, generally designated by the reference numeral 1, comprises at least one silo 2, 3 for storing the fodder, which is located in a region of the ship N that is located below deck.

The fodder is constituted preferably by fodder in pellets so as to facilitate the handling operations, limiting the formation of dust during such operations.

Preferably, there are two storage silos 2, 3, which are conveniently provided in two stem regions of the ship N which are arranged symmetrically with respect to the longitudinal median plane PML of the ship N so that the weight of the fodder that is loaded onto the ship N can be balanced adequately.

The system 1 comprises means 4 for automated drawing of the fodder from the storage silos 2, 3 to convey the fodder from the storage silos 2, 3 to an intermediate region 5 that is located at a higher level than the level at which the compartments 6 for the animals to be fed are located.

Moreover, the system according to the invention comprises means 7 for the automated distribution of the fodder from the intermediate region 5 to the compartments 6 for the animals to be fed.

Conveniently, the system according to the invention comprises also means 8 for the automated loading of the fodder into the storage silos 2, 3 so that the operations for loading the fodder into the storage silos 2, 3 and the subsequent distribution of the fodder to the compartments 6 for the animals to be fed can occur in an almost completely automated manner.

Advantageously, the means for handling the fodder along the system, i.e., the automated loading means 8 and/or the automated drawing means 4 and/or the automated distribution means 7, comprise chain-type conveyors and/or bucket elevators, of the known type, as will be better detailed hereinafter.

The chain-type conveyors that can be used in the system according to the invention are widespread in the field of the conveyance of granular and powdery products (cereals, fodders, earths, powdered coal, sugar, minerals, et cetera) and are composed of a transport box, the length of which varies according to the required transport distances and on the bottom of which a chain slides which is provided with cross-members which act on the product to be transported, which is poured into the transport box. The cross-members, by moving forward along the longitudinal extension of the transport box, move the supporting base of the product, causing the entire overlying product to move by way of the physical characteristic of the angle of repose of the product itself. By means of the chain-type conveyors, the product can be transported up to one end of the transport box or can be discharged at intermediate regions by providing, on the bottom of the transport box, adapted discharge outlets that can be opened and closed by means of shutters and/or valves which are preferably motorized and mutually spaced.

The bucket elevators that can be used in the system according to the invention are also widespread in the field of vertical transport of granular and powdery products and are constituted substantially by a pair of pulleys, one motorized and one of the guiding type, with horizontal and mutually parallel axes, which are arranged at different levels of height and are mutually connected by a belt, the two portions of which lie vertically or are inclined. Buckets are fixed to the belt and collect the product, making it advance along a direction with a vertical component and leaving it once the pulley that is located higher has been reached.

In greater detail, the automated loading means 8 comprise a chain-type loading conveyor 9, which is arranged transversely to the longitudinal median plane PML of the ship N at a higher level than the level of the storage silos 2, 3. The loading conveyor 9 is arranged, with its longitudinal ends, below the discharge outlets 10, 11, which are controlled by adapted closing shutters, of receiving hoppers 12, 13, inside which it is possible to pour the fodder that arrives from means of transport of the known type, such as for example trains, trailer trucks, or other ships, which are arranged alongside the ship N in wharf. The transfer of the fodder from these means of transport to the receiving hoppers 12, 13 can be performed by means of conveyors 14, 15 of the known type, such as for example belt conveyors or screw conveyors. The receiving hoppers 12, 13 are arranged proximate to the sides of the ship N so as to facilitate the operations for loading the fodder.

The loading conveyor 9 is provided, in a downward region, with discharge outlets 16 which are mutually spaced along the longitudinal extension of the loading conveyor 9 and are controlled by means of shutters that can be driven. The discharge outlets 16 supply filling conveyors 18, 19 of the chain type, which are adapted to convey and distribute, by means of a plurality of discharge outlets spaced along the longitudinal extension of the filling conveyors 18, 19, the fodder in a corresponding storage silo 2, 3.

Besides the filling conveyors 18, 19 at least one emergency filling conveyor 20 is provided, which has the function, if the maximum-level overflows of the storage silos 2, 3 are activated during the filling step of the storage silos 2, 3, to enable the complete emptying of all the filling conveyors 18, 19 by sending the excess fodder to an adapted sector of a silo, constituted, in the illustrated case, by the silo 2.

The automated drawing means 4 comprise drawing conveyors 21, 22 of the chain type, which are arranged below the storage silos 2, 3 at discharge outlets 23, 24 defined on the bottom of the corresponding storage silo 2, 3. More particularly, the bottom of the storage silos 2, 3 is divided into hopper-shaped regions 25, 26, each of which directs the fodder to one of the discharge outlets 23, 24, and each discharge outlet 23, 24 is controlled by means of a corresponding shutter which can be driven.

The drawing conveyors 21, 22 supply at least one bucket elevator 27, 28, which is adapted to discharge the fodder, drawn from the storage silos 2, 3, to the intermediate region 5.

In the illustrated embodiment, there are two bucket elevators 27, 28, which are arranged symmetrically with respect to the longitudinal median plane PML of the ship N.

Between the drawing conveyors 21, 22 and the bucket elevators 27, 28 exchange or bypass conveyors 29, 30 of the chain type are provided, which can be actuated in order to transfer the fodder from the drawing conveyors 21, 22, instead of to the bucket elevator 27 or 28 supplied by a drawing conveyor 21 or 22, to the other bucket elevator 28 or 27, if only one bucket elevator 27 or 28 is available in emergency situations or for maintenance requirements.

The bucket elevators 27, 28 supply a transverse distribution conveyor 31 of the chain type, which is arranged substantially horizontally at the intermediate region 5 and is oriented transversely to the longitudinal median plane PML of the ship N.

The transverse distribution conveyor 31 is provided with discharge outlets 32, which are mutually spaced along the longitudinal extension of the transverse distribution conveyor 31 and are controlled by means of shutters which can be driven.

The automated distribution means 7 comprise longitudinal distribution conveyors 33, 34 of the chain type, which are arranged below the transverse distribution conveyor 31 and are oriented longitudinally with respect to the ship N. The longitudinal distribution conveyors 33, 34 are supplied by the transverse distribution conveyor 31 by means of the discharge outlets 32 thereof, which are controlled by means of corresponding shutters which can be driven.

In turn, the longitudinal distribution conveyors 33, 34 supply, by means of discharge ports 35, 36 which are mutually spaced along the longitudinal extension of the corresponding longitudinal distribution conveyor 33, 34 and are controlled by corresponding shutters which can be driven, ducts 37, 38 for gravity distribution of the fodder, which lead into troughs located in the several compartments 6 for the animals to be fed. The compartments 6 are arranged in regions of the ship N which are at a level which is lower than the level of the intermediate region 5. Substantially, the intermediate region 5 is preferably arranged on the upper deck of the ship N, while the compartments 6 for the animals are arranged on the several lower decks of the ship N.

All the longitudinal distribution conveyors 33, 34 of the upper deck are provided with an adjustment device which makes it possible to dose the fodder to be fed into the stalls on all decks, or even avoids introducing it in stall without animals, so as to avoid waste or rotting of unused fodder.

Advantageously, the longitudinal distribution conveyors 33, 34 are provided with return discharge outlets 39, 40, which are arranged above at least one of the storage silos 2, 3 and are connected to corresponding discharge ducts 41, 42, through which it is possible to discharge the excess fodder into the storage silo 2, 3, as will become better apparent hereinafter.

The transverse distribution conveyor 31 also has at least one return discharge outlet 43, 44, which is located above at least one of the storage silos 2, 3 and is connected to a corresponding discharge duct 45, 46 in order to discharge the excess fodder into one of the storage silos 2, 3. In the illustrated embodiment, the transverse distribution conveyor 31 is provided with two return discharge outlets 43, 44, each connected to one of the storage silos 2, 3 and arranged proximate to a longitudinal end of the transverse distribution conveyor 31.

Moreover, the transverse distribution conveyor 31 is provided with at least one discharge outlet 47, which can be connected to extraction means 48, constituted for example by belt conveyors or screw conveyors, for unloading the fodder outside the ship N.

The shutters of the several chain-type conveyors of the system 1 may be constituted by shutters of the known type, which can be actuated by means of a corresponding electric servomotor.

The several chain-type conveyors and bucket elevators 27, 28 and the servomotors of the shutters that can be driven and which control the discharge outlets of the chain-type conveyors described above are functionally connected to a control and monitoring element 50 of the programmable electronic type, which supervises the operation of the entire system and actuates such elements according to preset programs so as to meet the several requirements of loading and unloading of the fodder and of feeding the transported animals, complying with precise feeding tables.

The control and monitoring element 50 is designed with such a redundancy as to make it possible to switch, in case of emergency, from a "first automatic" control and monitoring to a "second automatic" control and monitoring, and finally to a "manual" control and monitoring, so as to prevent any apparatus from remaining without electric power.

Operation of the system according to the invention is as follows.

The fodder, which comes from trains, trailer trucks or other ships, is poured into the hoppers 12, 13, which supply the loading conveyor 9. The fodder is fed from the loading conveyor 9 to the filling conveyors 18, 19, which dispense it into the storage silos 2, 3.

From the storage silos 2, 3, the fodder is drawn by the drawing conveyors 21, 22 and conveyed, by means of the bucket elevators 27, 28, to the transverse distribution conveyor 31.

From the transverse distribution conveyor 31, the fodder is conveyed to the longitudinal distribution conveyors 33, 34, which discharge the fodder into the discharge ducts 37, 38 that supply the troughs arranged in the compartments 6 for the animals to be fed.

It should be noted that the quantity of fodder that is dispensed into the troughs, as well as the frequency with which it is dispensed, can be adjusted very precisely by the control and management element 50, according to preset programs, by driving the shutters arranged on the discharge outlets 35, 36 of the longitudinal distribution conveyors 33, 34.

Moreover, again by means of the control and management element 50, it is possible to control and dose the filling and emptying of the storage silos 2, 3 so as to avoid creating load imbalances for the ship N.

If an excess of fodder occurs in the longitudinal distribution conveyors 33, 34 and/or in the transverse distribution conveyor 31, the fodder, by means of the return discharge outlets 39, 40, 43, 44, can be conveyed back into the storage silos 2, 3, preventing its dispersion or alteration.

After conveyance, any residual fodder can be easily discharged from the storage silos 2, 3 by means of the drawing conveyors 21, 22, the bucket elevators 27, 28 and the transverse distribution conveyor 31, which discharges the fodder through the discharge outlet 47 into discharge ducts or onto conveyors which supply ground transport means, such as for example trailer trucks, trains or other ships.

In practice it has been found that the system according to the invention fully achieves the intended aim since it is capable of managing, in an almost completely automated manner, the loading of the fodder on board the ship and its distribution into the troughs of the compartments for the animals to be fed according to preset quantities and frequencies by following preset programs.

Another advantage of the system according to the invention is that it is possible to convey the excess fodder back into the storage silos, thus avoiding its deterioration.

Another advantage of the system according to the invention is that it makes it possible, in an automated manner, to unload the residual fodder after the animals have been transported.

The system thus conceived is susceptible of numerous modifications and variations, all of which are within the scope of the appended claims. All the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system (1) for stowing, preserving and distributing fodder in ships for transporting large quantities of animals, **characterized in that** it comprises:
- at least one silo (2, 3) for storing the fodder, located in a region of the ship (N) that is located below deck;
- automated drawing means (4) for drawing of the fodder from said storage silo (2, 3) to convey it into at least one intermediate region (5) located at a higher level than the level at which the compartments (6) for the animals to be fed are located; said automated drawing means (4) comprise drawing conveyors (21, 22) of the chain type, which are arranged below said at least one storage silo (2, 3) at discharge outlets (23, 24) of the storage silo (2, 3)which are controlled by means of shutters that can be driven; said drawing conveyors (21, 22) supplying at least two bucket elevators (27, 28) which are adapted to discharge the fodder, drawn from said at least one storage silo (2,3), to said intermediate region (5),
- automated distribution means (7) for the distribution of the fodder from said intermediate region (5) to said compartments (6) for the animals to be fed,
**characterized in that** it further comprises
- automated loading means (8) for the loading of the fodder into said at least one storage silo (2, 3) ;
- a control and monitoring element (50) of the programmable electronic type, operatively connected to said automated drawing means (4) and said automatic loading means (8) for their operation according to preset programs said at least two bucket elevators (27, 28), are arranged symmetrically with respect to said longitudinal median plane (PML) of the ship (N), and **in that** between said drawing conveyors (21, 22) and said bucket elevators (27, 28) exchange or bypass conveyors (29, 30) of the chain type being provided for transferring the fodder from said drawing conveyors (21, 22) to one or to the other of said bucket elevators (27, 28).

2. The system (1) according to claim 1 **characterized in that** said at least one storage silo (2, 3) comprises at least two storage silos (2, 3) arranged symmetrically with respect to the longitudinal median plane (PML) of the ship (N).

3. The system (1) according to claims 1 or 2, **characterized in that** said automated loading means (8) and/or said automated drawing means (4) and/or said automated distribution means (7)comprise chain-type conveyors (9, 18, 19, 20, 21, 22, 29, 30, 31, 33, 34)and/or bucket elevators (27, 28).

4. The system (1) according to one or more of the preceding claims, **characterized in that** said automated loading means (8) comprise a chain-type loading conveyor (9), which is arranged transversely to the longitudinal median p lane (PML) of the ship (N) at a higher level than that of said at least one storage silo (2, 3); said loading conveyor (9) being provided, in a downward region, with discharge outlets (16) which are mutually spaced along the longitudinal extension of the loading conveyor (9) and are controlled by means of shutters that can be driven and that supply filling conveyors (18, 19) of the chain type, which are adapted to convey and distribute the fodder in a corresponding storage silo (2, 3).

5. The system (1) according to one or more of the preceding claims, **characterized in that** said bucket elevators (27, 28) supply a transverse distribution conveyor (31) of the chain type, which is arranged substantially horizontally at said intermediate region (5) and is oriented transversely to said longitudinal median plane (PML); said automated distribution means(7) comprising longitudinal distribution conveyors (33, 34) of the chain type, which are arranged below said transverse distribution conveyor (31) and are oriented longitudinally with respect to the ship (N; said longitudinal distribution conveyors (33, 34) being supplied by discharge outlets (32) of said transverse distribution conveyor (31) which are mutually spaced along the longitudinal extension of said transverse distribution (31) and are controlled by corresponding shutters that can be driven; said longitudinal distribution conveyors (33, 34) supplying, by means of discharge ports (35, 36) that are spaced along the longitudinal extension of the corresponding longitudinal distribution conveyor (33, 34)and are controlled by corresponding shutters that can be driven, ducts (3 7,38) for gravity distribution of the fodder, which lead into troughs located in the several compartments (6) for the animals to be fed, which are arranged below said intermediate region (5).

6. The system (1) according to claim 5, **characterized in that** said longitudinal distribution conveyors (33, 34) are provided with return discharge outlets (39, 40) which are arranged above at least one of said storage silos (2, 3) and are connected to corresponding discharge ducts (41, 42) for discharging into a storage silo (2, 3) the excess fodder.

7. The system (1) according to claim 5, **characterized in that** said transverse distribution conveyor (31) is provided with at least one return discharge outlet (43, 44) which is located above at least one of said storage silos (2, 3) and is connected to a corresponding discharge duct (45, 46) for discharging into a storage silo (2, 3) the excess fodder.

8. The system (1) according to claim 5, **characterized in that** said transverse distribution conveyor (31) is provided with at least one discharge outlet (47) which can be connected to extraction means (48) for discharging the fodder outside the ship (N).

9. The system (1) according to one or more of the preceding claims, **characterized in that** the control and monitoring element (50) of the programmable electronic type, which is functionally connected to said shutters that can be driven, to said conveyors (9, 18, 19, 20, 21, 22, 29, 30, 31, 33, 34) and to said bucket elevators (27, 28) for their actuation according to preset programs.

## Patentansprüche

1. System (1) zum Verstauen, Aufbewahren und Verteilen von Futter in Schiffen für den Transport von großen Mengen von Tieren, **dadurch gekennzeichnet, dass** es umfasst:
- mindestens ein Silo (2, 3) zum Verstauen des Futters, das in einem Bereich des Schiffes (N) angeordnet ist, der sich unterhalb des Decks befindet;
- automatische Saugmittel (4) zum Saugen des Futters aus dem besagtem Lagersilo (2, 3), um es zu einem mittleren Bereich (5), der auf einem höheren Niveau als auf dem Niveau, auf dem sich die Abteilungen (6) für die zu fütternden Tiere befinden, zu befördern; wobei die besagten automatischen Saugmittel (4) Saugförderer (21, 22) des Typs von Ketten umfassen, die sich unterhalb des besagten mindestens einen Lagersilo (2, 3) bei Abflussauslässen (23, 24) des Lagersilos (2, 3) befinden, die durch mindestens Ventile gesteuert werden, die angetrieben werden können; wobei die besagten Saugförderer (21, 22) mindestens zwei Beckerelevatoren (27, 28) liefern, die derart angepasst sind, dass sie das Futter, das aus dem besagten mindestens einen Lagersilo (2, 3) angesaugt wird, bis zum besagten mittleren Bereich (5) ablassen,
- automatische Verteilermittel (7) zum Verteilen des Futters aus dem besagten mittleren Bereich (6) zu den besagten Abteilungen (6) für die zu fütternden Tiere, **dadurch gekennzeichnet, dass** es weiter umfasst:
- automatisierte Lademittel (8) zum Laden des Futters in den besagten mindestens einem Lagersilo (2, 3);
- ein Steuer-und Kontrollelement (50) des programmbaren elektronischen Typs, das mit den besagten automatisierten Saugmitteln (4) und den besagten automatischen Lademitteln (8) für ihre Operation nach einem voreingestellten Programme, operativ verbunden ist; wobei die besagten mindestens zwei Becherelevatoren (27, 28) symmetrisch mit Bezug auf der besagten mittleren Längsebene (PML) des Schiffs (N), angeordnet sind, und wobei zwischen den besagten Saugförderern (21, 22) und den besagten Elevatoren (27, 28) Austausch-oder Bypass-Förderer (29, 30) des Typs von Ketten, angeordnet sind, um das Futter aus den besagten Saugförderern (21, 22) zum einen oder anderen der besagten Becherelevatoren (27, 28) .

2. System (1) nach Anspruch 1, **dadurch gekennzeichnet, dass** das besagte mindestens ein Lagersilo (2, 3) mindestens zwei Lagersilos (2, 3) umfasst, die symmetrisch mit Bezug auf der mittleren Längsebene (PML) des Schiffes (N), angeordnet sind.

3. System (1) nach Anspruch 1 oder 2, **dadurch gekennzeichnet, dass** die besagten automatisierten Lademittel (8) und/oder die besagten automatisierten Saugmittel (4) und/oder die besagten automatisierten Verteilermittel (7) Förderer des Typs von Ketten (9, 18, 19, 20, 21, 22, 29, 30, 31, 33, 34) und/oder Becherelevatoren (27, 28), umfassen.

4. System (1) nach einem oder mehreren der voreingehenden Ansprüchen 1, **dadurch gekennzeichnet, dass** die besagten automatisierten Lademittel (8) einen Ladeförderer des Typs von ketten (9) umfassen, der quer mit Bezug auf der mittleren Längsebene (PML) des Schiffes (N), auf einem höheren Niveau als dem des besagten mindestens einen Lagersilo (2, 3), angeordnet ist; wobei der besagte Ladeförderer (9) in einem nach unten gerichteten Bereich mit Auslassöffnungen (16) versehen ist, die durch die längliche Erstreckung des Ladeförderers zueinander beanstandet und durch Ventile gesteuert sind, die angetrieben werden können und Füllförderer (18, 19) des Typs von Ketten liefern, die derart angepasst sind, dass sie das Futter in ein entsprechendes Lagersilo (2, 3) fördern und verteilen.

5. System (1) nach einem oder mehreren der voreingehenden Ansprüchen, **dadurch gekennzeichnet, dass** die besagten Becherelevatoren einen Querverteilerförderer des Typs von Ketten (31) liefern, der im Wesentlichen waagerecht bei dem besagten mittleren Bereich (5) angeordnet und quer mit Bezug auf der besagten mittleren Längsebene (PML) orientiert ist; wobei die besagten automatisierten Verteilermittel (7) Längsverteilerförderer (33, 34) des Typs von Ketten umfassen, die unterhalb der besagten Querverteilerförderer (31) angeordnet und längsweise mit Bezug auf dem Schiff (N) orientiert sind; wobei die besagten Längsverteilerförderer (33, 34) durch Auslassöffnungen (32) des besagten Querverteilerförderers (31) geliefert werden, die durch die Längserstreckung der besagten Querverteilung (31) zueinander beanstandet sind und durch entsprechende Ventile gesteuert werden, die angetrieben werden können; wobei die besagten Längsverteilerförderer (33, 34) durch Auslassöffnungen (35, 36), die durch die Längserstreckung des entsprechenden Längsverteilerförderers (33, 34) beanstandet und durch entsprechende Ventile, die angetrieben werden können, gesteuert werden, mit Leitungen (3, 7, 38) für die Schwerkraftverteilung des Futters, die in Durchgänge führen, die in der Mehrheit von Abteilungen (6) für die zu fütternden Tiere, angeordnet sind, die unterhalb des besagten mittleren Bereich (5), angeordnet sind.

6. System (1) nach Anspruch 5, **dadurch gekennzeichnet, dass** die besagten Längsverteilerförderer (33, 34) mit Rückauslassöffnungen (39, 40) versehen sind, die oberhalb des mindestens einen der besagten Lagersilos (2, 3) angeordnet und mit entsprechenden Auslassleitungen (41, 42) verbunden sind, zum Ablassen des überschüssigen Futters in ein Lagersilo (2, 3).

7. System (1) nach Anspruch 5, **dadurch gekennzeichnet, dass** der besagte Querverteilerförderer (31) mit mindestens einem Rückauslassöffnung (43, 44) versehen ist, die oberhalb des mindestens einen der besagten Lagersilos (2, 3) angeordnet und mit einer entsprechenden Auslassleitung (45, 46) verbunden ist, zum Ablassen des überschüssigen Futters in ein Lagersilo (2, 3) .

8. System (1) nach Anspruch 5, **dadurch gekennzeichnet, dass** der besagte Querverteilerförderer (31) mit mindestens einer Auslassöffnung (47) versehen ist, die mit Extraktionsmitteln (48) verbunden ist, zum Ablassen des Futters außerhalb des Schiffes (N).

9. System (1) nach einem oder mehreren der voreingehenden Ansprüche, **dadurch gekennzeichnet, dass** das Steuer-und Kontrollelement (50) des programmbaren elektronischen Typs ist, und mit den besagten Ventilen, die angetrieben werden können, funktonal verbunden ist, mit den besagten Förderern (9, 18, 19, 20, 21, 22, 29, 30, 31, 33, 34) und mit den besagten Becherelevatoren (27, 28), für ihren Aktivierung nach voreingestellten Programmen, verbunden ist.

## Revendications

1. Système (1) de stockage, rétention et distribution de nourriture dans des navires pour le transport de grandes quantités d'animaux, **caractérisé en ce qu'**il comprend:
- au moins un silo (2, 3) pour stocker la nourriture, placé dans une région du navire (N) située stocké sous le pont;
- des moyens d'aspiration automatiques (4) pour aspirer la nourriture du dit silo de stockage (2, 3) pour le transporter au moins dans une région intermédiaire (5) située à un niveau supérieur en rapport au niveau auquel les compartiments (6) pour les animaux à alimenter sont situés; lesdits moyens d'aspiration automatisés (4) comprennent des convoyeurs (21, 22) du type à chaine, qui sont disposés au dessous dudit au moins un silo de stockage (2, 3) près des sorties de décharge (23, 24) du silo de stockage (2, 3) qui sont contrôlés par des vannes qui peuvent être actionnées; lesdits convoyeurs d'aspiration (21, 22) alimentent au moins deux élévateurs à godets (27, 28) qui sont adaptés pour décharger la nourriture, aspirée dudit au moins un silo de stockage (2, 3); jusqu'à ladite région intermédiaire;
- des moyens de distribution automatiques (7) pour la distribution de la nourriture de ladite région intermédiaire (5) auxdits compartiments (6) pour les animaux à alimenter,
**caractérisé en ce qu'**il comprend en outre
- des moyens de chargement automatisés (8) pour charger la nourriture dans ledit au moins un silo de stockage (2, 3),
- un élément de commande et contrôle (50) du type électronique programmable, connectés de manière opérationnelle avec lesdits moyens d'aspiration automatisés (4) et avec lesdits moyens de chargement automatiques (8) pour leur fonctionnement selon des programmes prédéfinis
lesdits au moins deux élévateurs à godets (27, 28) sont situés symétriquement par rapport audit plan médian longitudinal (PML) du navire (N), et que entre lesdits convoyeurs d'aspiration (21, 22) et lesdits élévateurs à godets (27, 28) sont situés des convoyeurs d'échange ou de contournement (29, 30) pour transférer la nourriture à partir desdits convoyeurs d'aspiration (21, 22) jusqu'à l'un ou à l'autre desdits élévateurs à godets (27, 28).

2. Système (1) selon la revendication 1, **caractérisé en ce que** ledit au moins un silo de stockage (2, 3) comprend au moins deux silos de stockage (2, 3) agencés symétriquement par rapport au plan médian longitudinal (PML) du navire (N).

3. Système (1) selon les revendications 1 ou 2, **caractérisé en ce que** lesdits moyens de chargement automatisés (8) et/ou lesdits moyens d'aspiration automatisés (4) et/ou lesdits moyens de distribution automatisés (7) comprennent des convoyeurs du type à chaine (9, 18, 19, 20, 21, 22, 29, 30, 31, 33, 34) et/ou des élévateurs à godets (27, 28).

4. Système (1) selon l'une ou plusieurs des revendications précédentes, **caractérisé en ce que** lesdits moyens de chargement automatisés (8) comprennent un convoyeur de chargement du type à chaine (9), qui est agencé transversalement par rapport au plan médian longitudinal (PML) du navire (N) à un niveau supérieur à celui d'au moins un silo de stockage (2, 3); ledit convoyeur de chargement (9) étant pourvu, dans une région descendante, d'ouvertures de déchargement (16) qui sont mutuellement espacées le long de l'extension longitudinale du convoyeur de chargement (9) et sont contrôlées par des vannes qui peuvent être actionnées et qui alimentent des convoyeurs de remplissage (18, 19) du type à chaine, qui sont adaptés pour transporter et distribuer la nourriture dans un silo de stockage (2, 3) correspondant.

5. Système selon l'une ou plusieurs des revendications précédentes, **caractérisé en ce que** lesdits élévateurs à godets (27, 28) alimentent un convoyeur de distribution transversal (31) du type à chaine, qui est disposé sensiblement horizontal dans ladite région intermédiaire (5) et est orienté transversal par rapport audit plan médian longitudinal (PML); lesdits moyens de distribution automatisés (7) comprennent des convoyeurs de distribution longitudinaux (33, 34) du type à chaine, qui sont disposés au-dessous dudit convoyeur de distribution transversal (31) et sont orientés longitudinalement par rapport au navire (N) ; lesdits convoyeurs de distribution longitudinaux (33, 34) étant alimentés par des sorties de décharge (32) dudit convoyeur de distribution transversal (31) qui sont mutuellement espacés le long de l'extension longitudinale de ladite distribution transversale (31) et sont contrôlés par des vannes correspondantes qui peuvent être actionnées ; lesdits convoyeurs de distribution longitudinaux (33, 34) alimentant, par des ouvertures de décharge (35, 36) qui sont espacées le long de l'extension longitudinale du correspondant convoyeur de distribution (33, 34) et sont contrôles par des différentes vannes qui peuvent être actionnées, des conduits (3, 7, 38) pour une distribution par gravité du fourrage, qui portent à des creux situés dans de nombreux compartiments (6) pour les animaux à alimenter, qui sont disposés au-dessous de ladite région intermédiaire (5).

6. Système selon la revendication 5, **caractérisé en ce que** lesdits convoyeurs de distribution longitudinaux (33, 34) sont pourvus de sorites de décharge de retour (39, 40) qui sont situées au-dessus d'au moins un desdits silos de stockage (2, 3) et sont connectées à des correspondants conduits de décharge (41, 42) pour décharger dans un silo de stockage le fourrage excédentaire.

7. Système selon la revendication 5, **caractérisé en ce que** ledit convoyeur de distribution transversal (31) est pourvu d'au moins une sortie de déchargement de retour (43, 44) qui est située au-dessus d'au moins un desdits silos de stockage (2, 3) et est connecté à un correspondant conduit de décharge (45, 46) pour décharger dans un silo de stockage (2, 3) le fourrage excédentaire.

8. Système selon la revendication 5, **caractérisé en ce que** ledit convoyeur de distribution transversal (31) est pourvue d'au moins une sortie de décharge (47) qui peut être connectée à des moyens d'extraction (48) pour décharger le fourrage à l'extérieur du navire (N).

9. Système selon l'une ou plusieurs des revendications précédentes, **caractérisé en ce que** l'élément de contrôle et surveillance (50) du type électronique programmable, qui est connecté fonctionnellement auxdites vannes qui peuvent être actionnées, auxdits convoyeurs (9, 18, 19, 20, 21, 22, 29, 30, 31, 33, 34) et auxdits élévateurs à godets (27, 28) pour leur actionnement selon des programmes présélectionnés.
